# EUROPÄISCHE PATENTSCHRIFT

(11) **EP 1 296 755 B1**
(45) Veröffentlichungstag und Bekanntmachung des Hinweises auf die Patenterteilung: **09.03.2005**
(21) Anmeldenummer: 01943542.9
(22) Anmeldetag: 21.06.2001
(51) Int. Cl.: B01J 13/04, C01B 15/10, C11D 3/39

(54) **COATINGVERFAHREN FÜR BASISCHE TEILCHENFÖRMIGE VERBINDUNGEN**
METHOD FOR COATING BASIC PARTICLE COMPOUNDS
PROCEDE D'ENROBAGE DE COMPOSES PARTICULAIRES BASIQUES

(30) Priorität: 01.07.2000 DE 10032177
(43) Veröffentlichungstag der Anmeldung: 02.04.2003
(73) Patentinhaber: Henkel Kommanditgesellschaft auf Aktien, 40589 Düsseldorf (DE)
(72) Erfinder: MILLHOFF, Jürgen, 40211 Düsseldorf (DE); GASSENMEIER, Thomas, Otto, 40229 Düsseldorf (DE); HÖFFKES, Horst, 40595 Düsseldorf (DE); KLEEN, Astrid, 40699 Erkrath (DE)
(74) Vertreter: Strohe-Kamp, Geertje
(86) Internationale Anmeldenummer: PCT/EP2001/007207
(87) Internationale Veröffentlichungsnummer: WO 2002/002221

(56) Entgegenhaltungen:
- EP-A- 0 358 853
- DE-A- 19 619 646

## Beschreibung

Die Erfindung betrifft ein neues Verfahren zur Umhüllung teilchenförmiger Verbindungen mit sauren, zur Salzbildung fähigen Hüllsubstanzen.

Teilchenförmige basische Verbindungen werden in vielen Produkten als Alkalisierungsmittel, in Wasch- und Reinigungsmitteln auch als basische Buildersubstanzen, eingesetzt. In pulverförmigen Haarfärbemitteln werden basische Verbindungen zur Einstellung hoher pH-Werte verwendet. Ein Problem stellt dabei die starke Hygroskopizität dieser Verbindungen dar, die bei Zutritt von Luftfeuchtigkeit leicht zum Verlust der Rieselfähigkeit und zur Verklumpung solcher pulverförmigen Zubereitungen führt. In manchen Fällen ist es auch wünschenswert, daß die basischen Verbindungen eine verzögerte Wasserlöslichkeit aufweisen.

Teilchenförmige Wasserstoffperoxid-Addukte (Peroxo-Verbindungen) werden für zahlreiche Bleich- und Oxidationsprozesse eingesetzt. In pulverförmigen Zubereitungen sind solche Peroxo-Verbindungen meist gemeinsam mit anderen Komponenten, z.B. mit Tensiden, Farbstoffen, optischen Aufhellem, Duftstoffen, antimikrobiellen Substanzen und anderen oxidationsempfindlichen Substanzen enthalten. Ein besonderes Problem stellt dabei die Stabilität der Peroxo-Verbindungen dar, da sie sich, besonders unter dem Einfluß von Feuchtigkeit, leicht unter Sauerstoffentwicklung zersetzen und dabei selbst ihre Oxidationskraft einbüßen und andere oxidationsempfindliche Komponenten der Zubereitung schädigen.

Es hat daher nicht an Vorschlägen gefehlt, teilchenförmige basische Verbindungen durch Zusätze, Granulierhilfsmittel oder auch durch Umhüllung (das sogenannte Coating) mit verschiedenen Stoffen vor einem Zutritt von Feuchtigkeit, einer zu raschen Auflösung oder einer vorzeitigen Zersetzung zu bewahren.

Aus EP 358 853 A2 ist ein Verfahren zur Stabilisierung teilchenförmiger Wasserstoffperoxid-Additionsverbindungen durch Aufsprühen wäßriger Lösungen von Homo- oder Copolymerisaten, z.B. von Polyacrylsäure, bekannt.

In WO 92/17400 A1 ist ein Verfahren zur Umhüllung von Natriumpercarbonat beschrieben, bei dem organische Polymerverbindungen in Form wäßriger Lösungen auf das, z.B. in einer Wirbelschicht bewegte, teilchenförmige Percarbonat aufgebracht werden.

In WO 93/20007 A1 ist ein Verfahren zur Umhüllung eines teilchenfönnigen Natriumpercarbonats mit einem bei 25°C flüssigen Medium beschrieben, das überwiegend aus einer Fettsäure oder einem Fettsäuregemisch besteht, welches in einem Mischer mit dem Percarbonat vermischt wird. Anschließend wird das Percarbonat mit einem feinteiligen Feststoff, z.B. mit Soda, bepudert.

Andere Coating-Verfahren benutzen wasserunlösliche, neutrale Polymere, Wachse oder Paraffine zur Umhüllung der Peroxo-Verbindung. Die bekannten Verfahren haben gravierende Nachteile. Entweder wird die Peroxo-Verbindung so wirksam eingehüllt, daß sie bei Gebrauch in wäßrigen Medien den aktiven Sauerstoff nicht mehr rasch genug abgibt - oder die Umhüllung ist ungleichmäßig und undicht und die Produkte sind gegen hohe Luftfeuchtigkeit oder gegenüber feuchten oder hygroskopischen Mischungsbestandteilen nicht ausreichend stabil.

Es bestand daher die Aufgabe, ein Coating-Verfahren zu finden, welches eine wasserlösliche Hülle von ausreichender Gleichmäßigkeit und Dichtigkeit bildet, die gegen Feuchtigkeitszutritt ausreichend schützt, aber trotzdem bei der Anwendung in wäßrigem Medium eine kontrollierte Auflösung oder bei Peroxo-Verbindungen eine rasche Freisetzung des aktiven Sauerstoffs ermöglicht. Diese Aufgabe wurde durch das erfindungsgemäße Verfahren in hohem Maße gelöst.

Gegenstand der Erfindung ist ein Verfahren zur Umhüllung teilchenförmiger basischer Verbindungen mit sauren, zur Salzbildung fähigen Hüllsubstanzen, dadurch gekennzeichnet, daß man die basischen Verbindungen in einer Lösung der Hüllsubstanzen in einem nicht-wäßrigen Lösungsmittel, in dem sich die Hüllsubstanz in der Säureform gut, in der Salzfonn aber wenig löst, suspendiert und nach einer Einwirkungszeit wieder abtrennt.

Als teilchenförmige basische Verbindungen kommen dabei z.B. die Salze starker Basen und schwacher Säuren in Frage, z.B. die Alkalisalze der Kohlensäure, z.B. Soda, Kaliumcarbonat, Alkaliphosphate und Alkalisilikate. In einer bevorzugten Ausführung werden als teilchenförmige basische Verbindungen basische Peroxoverbindungen eingesetzt.

Als basische Peroxo-Verbindungen werden Wasserstoffperoxid-Additionsverbindungen an basische Salze und basische Peroxosalze verstanden. Als Beispiele können angeführt werden:
- Natriumpercarbonat, eigentlich Natriumcarbonat-Peroxohydrat mit der durchschnittlichen Zusammensetzung (Na₂CO₃)₂(H₂O₂)₃
- Natriumperborat, eigentlich Natriumperoxoborat-Trihydrat, mit der Zusammensetzung Na BO₂·H₂O₂·3H₂O
- Natriumperborat (wasserfrei) NaBO₂·H₂O₂
- Perborax (Na₂B₄O₇·4H₂O₂)
- Peroxophosphate, z.B. K₄P₂O₈ (Kaliumperoxodiphosphat)
- Natriumcitrat-Perhydrat (z.B. gemäß DE 19 20 831 A)

Diese Peroxoverbindungen reagieren basisch, d.h. sie reagieren mit sauren Verbindungen oder mit Polymeren, die saure Gruppen tragen, unter Salzbildung.

Als saure Hüllsubstanzen werden solche Verbindungen verstanden, die eine Erweichungstemperatur oder einen Schmelzpunkt von mehr als 40°C aufweisen und die saure, zur Salzbildung befähigte Gruppen, z.B. Carboxylgruppen, -SO₃H-Gruppen oder -PO₃H₂-Gruppen aufweisen. Solche Hüllsubstanzen können sowohl monomere als auch polymere Stoffe sein. Bevorzugt sind die Hüllsubstanzen in der Säureform unlöslich oder schwerlöslich in Wasser, erlangen aber durch Überführung in das Alkalisalz, z.B. in das Natriumsalz, eine gewisse Wasserlöslichkeit. Geeignete Hüllsubstanzen können z.B. langkettige Fettsäuren oder langkettige Alkylphosphate sein.

In einer bevorzugten Ausführung wird als Hüllsubstanz ein filmbildendes Polymerisat mit freien Carboxylgruppen und mit einer Erweichungstemperatur von mehr als 40°C eingesetzt.

Dabei handelt es sich beispielsweise um Copolymerisate aus Acryl- und/oder Methacrylsäure und nichtionischen Monomeren, z.B. Copolymerisate aus Methacrylsäure und Methacrylsäureestern einwertiger Alkohole. Besonders bevorzugte Hüllsubstanzen sind filmbildende Acrylharzlackrohstoffe, die Copolymerisate mit freien Carboxylgruppen auf Basis von Methacrylsäure und Methacrylsäuremethylester im Molverhältnis 1:1 bis 1:3 darstellen, deren mittleres Molekulargewicht über 100 000 liegt und die unter dem Warenzeichen Eudragit® (Röhm) im Handel sind.

Als nichtwäßrige Lösungsmittel eignen sich organische Flüssigkeiten, die für die Hüllsubstanz in der Säureform eine höhere Löslichkeit aufweisen als für die Hüllsubstanz in Form ihres Alkalisalzes. Auf diese Weise kann sich die Hüllsubstanz an der Oberfläche der teilchenförmigen, basischen Peroxosalze zu dem schwerer löslichen Alkalisalz umsetzen und auf dem Teilchen als dichte Hülle niederschlagen. Vorzugsweise sollte das Lösungsmittel auch so niedrigsiedend sein, daß es sich nach dem Abtrennen der umhüllten Teilchen der Peroxo-Verbindung leicht durch Trocknen, gegebenenfalls unter vermindertem Druck, entfernen läßt.

In einer bevorzugten Ausführung des erfindungsgemäßen Verfahrens wird als nichtwäßriges Lösungsmittel ein flüssiges, bei Normaldruck unterhalb von 150°C siedendes organisches Lösungsmittel eingesetzt, in dem sich die saure Hüllsubstanz zu wenigstens 2 Gew.-% (20°C) löst und in dem sich ein Alkalisalz der Hüllsubstanz zu weniger als 0,1 Gew.-% (20°C) löst. Als Alkalimetall wird jeweils das Alkalimetall verstanden, das der Peroxo-Verbindung zugrunde liegt, also in der Regel Natrium oder Kalium.

Das erfindungsgemäße Verfahren eignet sich in bevorzugter Weise zur Umhüllung und Stabilisierung von Natriumpercarbonat. In einer bevorzugten Ausführung wird daher als basische Peroxo-Verbindung das Natriumpercarbonat (Na₂CO₃)₂·(H₂O₂)₃ eingesetzt. Als Hüllsubstanz wird bevorzugt ein Copolymerisat der Acryl- oder Methacrylsäure mit einem Äquivalentgewicht, bezogen auf freie Carboxylgruppen, von 200-500 und einem mittleren Molekulargewicht von 100000-500000 eingesetzt. Als Lösungsmittel für diese Hüllsubstanz eignen sich bevorzugt einwertige Alkohole mit 1-4 C-Atomen.

Das erfindungsgemäß erhaltene, stabilisierte, teilchenformige Natriumpercarbonat erweist sich als sehr gut lagerbeständig, auch bei erhöhter Luftfeuchtigkeit. Die Dichtigkeit der Hülle ist so lückenlos, daß das Produkt sogar in konzentrierten wäßrigen Salzlösungen, in denen die Hüllsubstanz auch in der Salzform schwerlöslich ist, über längere Zeiträume ohne nennenswerte Zersetzung bzw. Gasbildung gelagert werden kann. Das folgende Beispiel soll den Gegenstand der Erfindung näher erläutern:

### Beispiel

30 ml einer Lösung von 12,5 Gew.-% eines Copolymerisats aus Methacrylsäure und Methylmethacrylat (Molverhältnis 1:2), in Isopropanol (Eudragit S 12,5 P) wurden mit 60 ml Isopropanol weiterverdünnt, so daß eine Lösung von 4,2 Gew.-% des Copolymerisats in Isopropanol erhalten wurde.

In diese Polymerlösung wurden 100 g Natriumpercarbonat des Typs Q30 (DEGUSSA) mit einem Teilchendurchmesser von 0,15-1,4 mm (85%) und einen AktivsauerstoffGehalt von 13,0 Gew.-% eingetragen und unter Rühren in Suspension gehalten. Nach 2 Stunden wurden nochmals 30 ml Eudragit S 12,5 P und nach weiteren 20 Stunden nochmals 30 ml Eudragit S 12,5 P zugegeben.

Nach 24 Stunden Einwirkungszeit wurde das teilchenförmige Natriumpercarbonat durch Filtration abgetrennt und unter vermindertem Druck getrocknet. Das auf diese Weise umhüllte Natriumpercarbonat konnte in gesättigter wäßriger Citronensäure dispergiert und über 2 Stunden ohne Gasentwicklung gelagert werden. Nach Verdünnung der Dispersion mit Wasser kam es zu einer lebhaften Gasentwicklung.

## Patentansprüche

1. Verfahren zur Umhüllung teilchenförmiger, basischer Verbindungen mit sauren, zur Salzbildung fähigen Hüllsubstanzen, **dadurch gekennzeichnet, daß** man die Verbindungen in einer Lösung der Hüllsubstanzen in einem nicht-wäßrigen Lösungsmittel, in dem sich die saure Hüllsubstanz gut, ihr Alkalisalz aber wenig löst, suspendiert und nach einer Einwirkungszeit wieder abtrennt.

2. Verfahren nach Anspruch 1, dadruch gekennzeichnet, daß man als teilchenförmige, basische Verbindungen basische Peroxoverbindungen einsetzt.

3. Verfahren nach Anspruch 1 oder 2, dadurch gekennzeiclmet, daß als Hüllsubstanz ein filmbildendes Polymerisat mit freien Carboxylgruppen und einer Erweichungstemperatur von mehr als 40°C eingesetzt wird.

4. Verfahren nach einem der Ansprüche 1 - 3, **dadurch gekennzeichnet, daß** als nichtwäßriges Lösungsmittel ein flüssiges, bei Normaldruck unterhalb 150°C siedendes organisches Lösungsmittel eingesetzt wird, in dem sich die saure Hüllsubstanz zu wenigstens 2 Gew.-% (20°C) löst und in dem sich ein Alkalisalz der Hüllsubstanz zu weniger als 0,1 Gew.-% (20°C) löst.

5. Verfahren nach einem der Ansprüche 2 - 4, **dadurch gekennzeichnet, daß** man als basische Peroxo-Verbindung das Natriumpercarbonat (Na₂CO₃)₂·(H₂O₂)₃ einsetzt.

6. Verfahren nach einem der Ansprüche 1 - 5, **dadurch gekennzeichnet, daß** als Hüllsubstanz ein Copolymerisat der Acryl- oder Methacrylsäure mit einem Äquivalentgewicht (pro freie Carboxylgruppe) von 200-500 und einem mittleren Molekulargewicht von 100000-500000 und als Lösungsmittel ein einwertiger Alkohol mit 1-4 C-Atomen eingesetzt wird.

## Claims

1. A process for coating particulate basic compounds with acidic coating materials capable of forming salts, **characterized in that** the compounds are suspended in a solution of the coating materials in a non-aqueous solvent, in which the acidic coating material is readily soluble, but its alkali metal salt poorly soluble, and are removed again after a contact time.

2. A process as claimed in claim 1, **characterized in that** basic peroxo compounds are used as the particulate basic compounds.

3. A process as claimed in claim 1 or 2, **characterized in that** a film-forming polymer containing free carboxyl groups and softening at temperatures above 40°C is used as the coating material.

4. A process as claimed in any of claims 1 to 3, **characterized in that** the non-aqueous solvent is a liquid organic solvent which boils below 150°C at normal pressure and in which at least 2% by weight of the acidic coating material is soluble (20°C) and less than 0.1% by weight of an alkali metal salt of the coating material is soluble (20°C).

5. A process as claimed in any of claims 2 to 4, **characterized in that** sodium percarbonate (Na₂CO₃)₂·(H₂O₂)₃ is used as the basic peroxo compound.

6. A process as claimed in any of claims 1 to 5, **characterized in that** the coating material is a copolymer of acrylic or methacrylic acid with an equivalent weight (per free carboxyl group) of 200 to 500 and an average molecular weight of 100,000 to 500,000 and the solvent is a monohydric C₁₋₄ alcohol.

7. Stabilized particulate sodium percarbonate, **characterized in that** it is obtained by the process claimed in any of claims 1 to 6.

## Revendications

1. Procédé d'enrobage de composés basiques sous forme de particules par des substances d'enrobage acides, aptes à la formation de sels, **caractérisé en ce qu'**on met en suspension les composés dans une solution des substances d'enrobage dans un solvant non aqueux, dans lequel la substance d'enrobage acide se dissout bien mais son sel de métal alcalin peu, et on les sépare à nouveau après un temps d'action.

2. Procédé selon la revendication 1, **caractérisé en ce qu'**on utilise comme composés basiques sous forme de particules des composés peroxo basiques.

3. Procédé selon la revendication 1 ou 2, **caractérisé en ce qu'**on utilise comme substance d'enrobage un polymère formant un film avec des groupes carboxyle libres et une température de ramollissement supérieure à 40°C.

4. Procédé selon l'une quelconque des revendications 1 à 3, **caractérisé en ce qu'**on utilise comme solvant non aqueux un solvant organique liquide, présentant un point d'ébullition inférieur à 150°C à la pression normale, dans lequel la substance d'enrobage acide se dissout à raison d'au moins 2% en poids (20°C) et dans lequel un sel de métal alcalin de la substance d'enrobage se dissout à raison de moins de 0,1% en poids (20°C).

5. Procédé selon l'une quelconque des revendications 2 à 4, **caractérisé en ce qu'**on utilise comme composé peroxo basique le percarbonate de sodium (Na₂CO₃)₂.(H₂O₂)₃.

6. Procédé selon l'une quelconque des revendications 1 à 5, **caractérisé en ce qu'**on utilise comme substance d'enrobage un copolymère de l'acide acrylique ou méthacrylique avec un poids équivalent (par groupe carboxyle libre) de 200 à 500 et un poids moléculaire moyen de 100000 à 500000 et comme solvant un alcool monovalent comprenant 1 à 4 atomes de carbone.
